# EUROPEAN PATENT SPECIFICATION

(11) **EP 2 549 250 B1**
(45) Date of publication and mention of the grant of the patent: **07.03.2018**
(21) Application number: 12177015.0
(22) Date of filing: 19.07.2012
(51) Int. Cl.: G01J 5/12

(54) **Thermopile design for an infrared sensor**
Design von Thermosäulen für einen Infrarotsensor
Design de thermopiles pour un détecteur infrarouge

(30) Priority: 20.07.2011 GB 201112430
(43) Date of publication of application: 23.01.2013
(73) Proprietor: Melexis Technologies NV, 3980 Tessenderlo (BE)
(72) Inventor: Kassovski, Viktor, 1715 Sofia (BG); Nedelev, Petko, 1612 Sofia (BG)
(74) Representative: Hertoghe, Kris Angèle Louisa

(56) References cited:
- EP-A1- 1 780 522
- US-A1- 2003 205 670
- US-B2- 7 473 029

## Description

### Field of the invention

The present invention generally relates to non-contact temperature measuring and more particularly to improvements in infrared thermometers.

### Background of the invention

A conventional thermopile comprises a string of thermocouples, which are junctions of different materials coupled at one end and separated at the other ends. The coupled ends form a hot junction, and the separate ends form a cold junction. The thermocouples yield a voltage difference at the output terminals (separate ends) when a temperature difference exists between the cold and the hot junctions.

A thermopile can be laid out in a radial or a linear configuration. In the radial configuration, the hot junctions are located on an inner periphery, and the cold junctions are located on an annulus slightly removed therefrom. In a linear configuration, the junctions are arranged in rows. A radial thermopile configuration is for example described in EP0995978 or in JP61259580, and is illustrated in FIG. 1 (drawing taken from JP61259580).

A thermoanalytic sensor is described in US7473029B2 and used to study physical or chemical properties of unknown substances by performing a differential heat flow calorimetry measurement and comparing the results with a known reference substance. The thermoanalytic sensor increases sensitivity by interleaving and serially connecting two star-shaped thermopiles in a double-star configuration. The outer star-shaped thermopile has hot and cold junctions at a different radial position than the corresponding hot and cold junctions of the inner star-shaped thermopile and therefore measures at different temperatures. The thermoelectrically induced voltage of the two thermopiles typically contributes in different parts to the overall thermoelectric voltage at the output leads.

A more compact thermopile design is described in US2003205670A1 in which stacking of thermocouple legs is disclosed. Stacking reduces the occupied die area of a sensor element and allows for an increased number of thermocouples, and above all their hot junctions, tp be placed in proximity to the center of highest temperature. The application does not address the problems of non-uniformity of thermocouple responses as a result of fabrication processes and design choices.

An improved IR sensor is disclosed in EP1780522A1; the improvement is largely the result of a radial arrangement of thermocouples around a membrane region obtained by backside etching of the substrate. The particular geometric arrangement yields a more homogenous response of the ensemble of thermocouples and also results in an increased device similarity. The invention also uses stacked thermocouples to improve packaging densities and mentions co-integration of signal processing circuitry. EP1780522A1 does not describe how and if the invention prevents digital signal processing circuitry perturbing the sensor response via substrate disturbance signals coupling back into the sensor element as one source of artificial offsets, nor does it give an explanation on how to cancel or reduce unwanted voltage offsets occurring at the thermopile outputs.

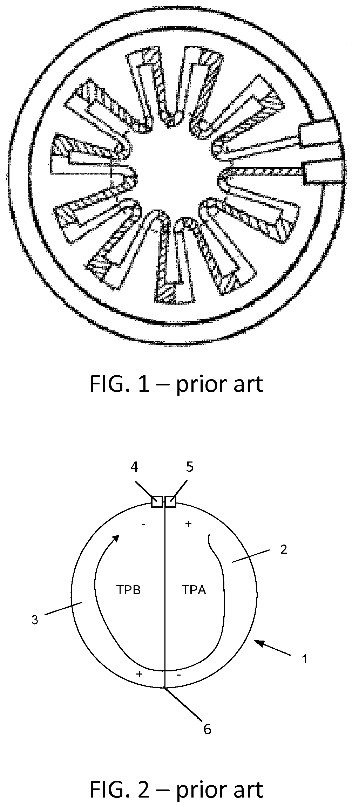

As an example only, a conceptual layout of a radial thermopile pixel 1 is illustrated in FIG. 2. The thermocouples are electrically connected in series, and this series connection is split into a first group 2 of thermocouples, also called TPA, and a second group 3 of thermocouples, also called TPB. The first and second groups 2, 3 of thermocouples are of equal size (equal number of thermopiles). At either side of the series connection, an output terminal 4, 5 is provided, between which output terminals 4, 5 a voltage is delivered if the thermopile detects a variation in heat between the hot and the cold junctions. The output terminals 4, 5 are geometrically separated from one another. The connection point 6 between the first group 2 and the second group 3 is taken as a reference node.

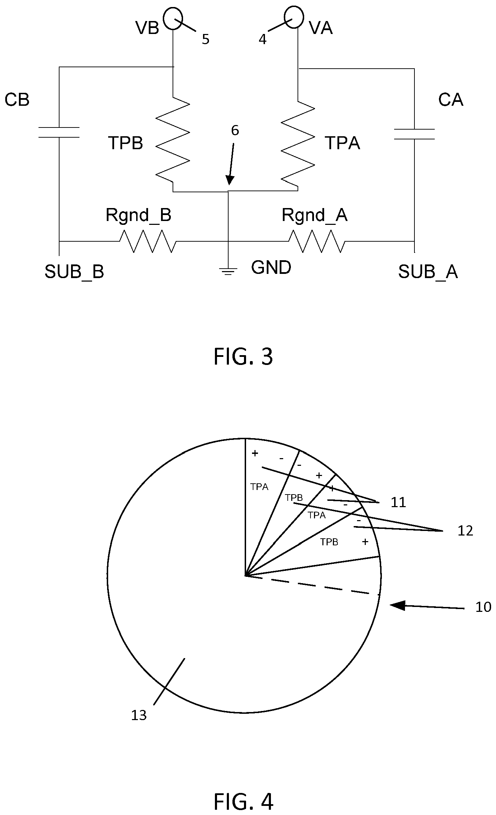

The thermopile can be schematically illustrated as two (or more) equally sized resistors connected in series. This is done to enable the possibility of differential signal processing by connecting the middle point (connection point 6) to a reference voltage (incl. GND and VDD). A conceptual view of how the thermopile is organized is shown in FIG. 3.

VA and VB illustrate the voltages at the output terminals 4 and 5, respectively. TPA and TPB illustrate the electrical resistance of the first group 2 and second group 3 of thermocouples, respectively. These resistances are coupled in series to one another, and the connection point 6 between the first group 2 and the second group 3 is also illustrated. This reference node 6, in the embodiments illustrated, is coupled to ground. SUB-A and SUB_B illustrate substrate voltages at the first group 2 of thermopiles and at the second group 3 of thermopiles, respectively. CA and CB illustrate parasitic capacitances of the first group 2 of thermocouples and the second group 3 of thermocouples, respectively, to the substrate at the cold junction. Rgnd_A and Rgnd_B illustrate the substrate resistance at the first group 2 of thermopiles and at the second group 3 of thermopiles, respectively.

A problem with the configuration as illustrated in FIG. 3 is that the electrical disturbance in the substrate (SUB_A, SUB_B) can couple to VA and VB in a non-symmetrical way because of:
1) an increased and non-uniform substrate resistance Rgnd_a and Rgnd_B in the vicinity of the pixel, e.g. as a result of back side etching,
2) a mismatch between the parasitic capacitances CA and CB due to for example process variations and/or incomplete symmetry in layout,
3) a mismatch between the thermocouple resistances TPA and TPB, e.g. because of process variations.

If it is assumed that there is a disturbance from a common noise source to SUB_A and SUB_B, the coupling to the output terminals 4, 5, hence to the voltages VA, VB, can be different. This might result in an offset at the signals VA and VB measured at the output terminals 4, 5 which is different at both output terminals 4, 5. Assuming the magnitude of the disturbance is proportional to the supply voltage of the whole circuit, which is usually the case, this disturbance averages on the thermopile resistances TPA, TPB and gives rise to a voltage supply plus an offset. This offset is temperature dependent as it comes from operation of a digital part which is on the same die. The current consumption of that digital part is temperature dependent, hence the induced offset is also temperature dependent.

### Summary of the invention

It is an object of embodiments of the present invention to provide a thermopile structure which significantly reduces, or even gets rid of, temperature dependent offsets on a thermopile output.

The above objective is accomplished by a device according to the present invention.

In a first aspect, the present invention provides a detector for responding to infrared radiation from a target, to produce a temperature indicating output signal to measurement electronics. Said detector comprises a plurality of thermocouples laid out on a substrate. Each thermocouple comprises a first leg of a first material and a second leg of a second material, the first material being different from the second material, the first leg and the second leg being electrically connected. The plurality of thermocouples are split into two groups, a first group comprising a plurality of first thermocouples electrically connected in series, and a second group comprising a plurality of second thermocouples electrically connected in series. The first group and the second group of thermocouples are electrically connected in series with one another at a connection point. The first group and the second group of thermocouples are supported on a common substrate in close proximity to one another and first legs of thermocouples of the first group are physically interleaved with first legs of thermocouples of the second group.

In particular embodiments of the present invention, also second legs of the thermocouples of the first group are interleaved with second legs of the thermocouples of the second group.

The first leg of a thermocouple and the second leg of the thermocouple do not necessarily need to be placed on top of or adjacent one another. In an example not falling under the scope of the present invention, they are placed on top of or adjacent one another, and complete thermocouples of the first group are interleaved with thermocouples of the second group. In such examples, a detector is provided for responding to infrared radiation from a target to produce a temperature indicating output signal to measurement electronics. Said detector comprises a first group comprising a plurality of first thermocouples each having a junction for producing an output voltage, the plurality of first thermocouples being electrically connected in series, and a second group comprising a plurality of second thermocouples each having a junction for producing an output voltage, the plurality of second thermocouples being electrically connected in series. The first group and the second group of thermocouples are electrically connected in series with one another at a connection point. The first group and the second group are supported on a common substrate in close proximity to one another and thermocouples of the first group are physically interleaved with thermocouples of the second group along a path, e.g. a circular or linear path, over the detector.

In particular embodiments of the present invention, thermocouples of the first group and thermocouples of the second group may be physically interleaved along an essentially circular path. In alternative embodiments, thermocouples of the first group and thermocouples of the second group may be physically interleaved along an essentially linear path.

In examples not falling under the scope of the present invention, the thermocouples may be made from a first leg of a first material and a second leg of a second material, whereby the first leg and the second leg forming the thermocouple are stacked on top of one another. In such case complete thermocouples are interleaved with one another. This is called single interleaving.

According to the present invention, the thermocouples are made from a first leg of a first material and a second leg of a second material. Stacks of first legs and second legs are made, such a stack, however, not forming a thermocouple. A thermocouple is physically made from a first material from a first stack of first and second materials, and from a second material from a second stack of first and second materials. In the context of the present invention, this is called double interleaving. Double interleaving provides very useful electrical properties of the thermopile: the intermaterial coupling capacitance provides AC connection between thermocouple resistances TPA and TPB, which further suppresses averaging of disturbance induced offset on the thermopile's terminals. In particular embodiments, the first stack and the second stack may be adjacent to one another.

In a detector according to embodiments of the present invention, when progressing along a geometrical direction over the plurality of thermocouples, polarity of the first group of thermocouples may be electrically opposite with respect to polarity of the second group of thermocouples. This way, any coupled disturbance will be seen as common mode and will be rejected in a differential design.

A detector according to embodiments of the present invention may furthermore comprise a signal processor adapted for differentially processing signals at the connection point.

In a second aspect, the present invention provides a detection apparatus comprising a plurality of detectors according to embodiments of the first aspect of the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 illustrates a prior art radial thermopile.
FIG. 2 illustrates a prior art radial thermopile where the thermocouples making up the thermopile are split in two groups for differential signal processing.
FIG. 3 illustrates a schematic electrical equivalent of the thermopile schematically illustrated in FIG. 2.
FIG. 4 schematically illustrates a thermopile according to an example, the thermopile being split into two groups of thermocouples electrically connected in series, where thermocouples of the first group are physically interleaved with thermocouples of the second group.
FIG. 5 is a more detailed illustration of an example as in FIG.4, where the thermocouples each comprise a first and a second leg of different materials laid out adjacent one another.
FIG. 6 illustrates another example of a thermopile as in FIG.4, where the thermocouples each comprise a first and a second leg of different materials, the first and the second legs of a thermocouple being stacked onto one another.
FIG. 7 illustrates another example of a thermopile, the thermopile being split into two groups of thermocouples electrically connected in series, where thermocouples of the first group are physically interleaved with thermocouples of the second group, the thermocouples being laid out along a linear pattern.
FIG. 8 illustrates an embodiment of a thermopile according to the present invention, the thermopile being split into two groups of thermocouples electrically connected in series, the thermocouples each comprising a first and a second leg of different materials, a first leg of a thermocouple being stacked on top of a second leg of another thermocouple, where first legs of thermocouples of the first group are physically interleaved with first legs of thermocouples of the second group, the thermocouples being laid out along a linear pattern.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

### Detailed description of illustrative embodiments and examples

The present invention will be described with respect to particular embodiments and examples and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

A thermocouple is a junction between two different materials that converts thermal energy into electrical energy, e.g. that produces a voltage related to a temperature difference (Seebeck effect). The two different materials are joined at one end and separated at the other. The separated ends are considered the output, and they generate a voltage which is proportional to the heat difference between the joined ends and the separated ends. In embodiments of the present invention, the thermocouples considered are integrated thermocouples. Suitable materials for forming integrated thermocouples are two different types of polysilicon: N and P type. Other examples of suitable materials are Silicon-Germanium compounds and Bi-Te and Bi-Sb-Te thermoelectric materials.

A thermopile is an electronic device composed of a plurality of thermocouples, which are usually connected in series. A thermopile does not respond to absolute temperature, but generates an output voltage proportional to a local temperature difference or temperature gradient. Thermopiles are widely used in non-contact temperature measurement applications and temperature monitoring systems. Thermopiles detect the temperature of an object by absorbing the infrared (IR) radiation that emits from the object's surface.

In a thermopile detector, the "hot junctions" of the thermocouples face the incident IR radiation from an object, whereas the "cold junctions" are connected to a heat sink, for example a semiconductor, e.g. silicon, substrate. Once the detector is pointed towards the object, heat flows from the object to the thermopile. This heat flow creates a significant temperature difference between the hot and cold junctions, and this contributes to an increase in the output electric signal of the thermopile.

In the context of the present invention, interleaving relates to arranging thermocouples or parts thereof in a physical layout. When thermocouples of a first group are interleaved with thermocouples of a second group, the thermocouples of the first group are interspersed at regular intervals between the thermocouples of the second group, and vice versa.

FIG. 4 schematically illustrates a detector 10 according to an example, for detection of infrared radiation emanating from a target. The detector 10 may be a single pixel of a detection unit.

The detector 10 comprises a first group 11 comprising a plurality of first thermocouples each having a junction for producing an output voltage. The first thermocouples are electrically connected in series. The detector 10 also comprises a second group 12 comprising a plurality of second thermocouples each having a junction for producing an output voltage. The first group 11 and the second group 12 are supported on a common substrate 13 in close proximity to one another. Exemplarily, thermocouples of the first group 11 are physically interleaved with thermocouples of the second group 12 along a circular or linear path over the detector.

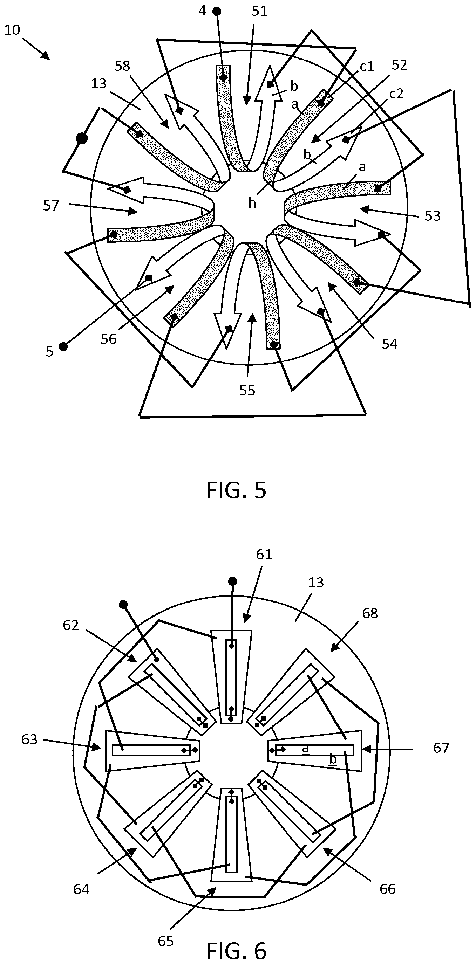

One example of a detector 10 as schematically illustrated in FIG. 4 is illustrated in more detail in FIG.5. The detector 10 comprises a plurality of thermocouples. For ease of illustration, only eight thermocouples 51, 52, 53, 54, 55, 56, 57, 58 are shown, but in reality a single pixel may comprise a lot more thermocouples, for example between 20 and 200 thermocouples, e.g. 120 thermocouples. The actual number of thermocouples in a thermopile can vary in wide range. Actually the number of thermocouples is a design parameter which can be chosen by system designer taking into account also signal level, output resistance, signal to noise ratio etc.. The actual number of thermocouples in a detector 10 depends on the available substrate surface, and on the dimensions and spacing of the thermocouples forming the thermopile in the detector 10. Exemplarily, the number of thermocouples is even, so that two groups 11, 12 of equal number of thermocouples can be formed. It is clear for a person skilled in the art that increasing the number of thermocouples in a thermopile will increase the sensitivity of the thermopile to infrared radiation.

The plurality of thermocouples 51, 52, 53, 54, 55, 56, 57, 58 are interconnected in series to form a thermopile having an electrical first output terminal 4 and an electrical second output terminal 5. The voltage generated by the thermopile in response to radiation from a target is measured across the first and second output terminals 4, 5. The detector pixel 10, when detecting infrared radiation from a target, produces a temperature indicating output signal to measurement electronics based on this voltage measured across the first and second output terminals 4, 5.

Each thermocouple 51, 52, 53, 54, 55, 56, 57, 58 consists of two legs a, b made of different conductive materials. These materials are connected to one another at a first junction h, called the hot junction of the thermocouple. The other ends of the legs a, b are left separated, and form the cold junction c1, c2 of the thermocouple. A thermocouple produces a voltage as a function of the temperature difference between the cold junction c1, c2 and the hot junction h. This voltage is available between the two separated leg ends forming the cold junction c1, c2 and has a particular polarity.

In the example illustrated in FIG. 5, the thermocouples 51, 52, 53, 54, 55, 56, 57, 58 are laid out in a radial pattern. All hot junctions h are located in a small area, for example within a radius which depends on the pixel size, for example a radius of less than 0.5 mm, e.g. less than 50 µm, from the center point. Such small area makes sure that the thermocouples receive essentially the same infrared radiation from the target. The smaller the receiving area, the higher the resolution of an infrared sensing apparatus may be. Of course the resolution will depend also on the distance between 2 adjacent pixels.

In alternative examples, not illustrated in the drawings, a pixel may be round, e.g. having a diameter between 150 and 250 µm, such as a diameter of 180 µm, and thermocouples may be placed at two rings: an inner ring and an outer ring. In the example of a pixel with a diameter of 180 µm, the radius of the inner ring may be e.g. about 25 um from the center point of the pixel, and the thermocouples of the outer ring may for example be at about 45 µm from the center point of the pixel.

The thermocouples are electrically connected to one another so that electrically connected adjacent thermocouples have the same polarity. This means that a leg b of a second type of material of a first thermocouple is electrically coupled by an external connection (not forming part of the thermocouple) to a leg a of a first type of material of a second thermocouple, and so on.

In examples, as illustrated in FIG. 5, thermocouples are not electrically connected to physically located neighboring thermocouples, but other thermocouples are put in between two electrically directly connected thermocouples. In the example illustrated, thermocouple 51 is electrically connected to thermocouple 53 by making an external electrical connection between the leg b of the second type of material of thermocouple 51 with leg a of the first type of material of thermocouple 53. In this manner, thermocouples 51, 53, 55, 57 are electrically connected to one another so as to form the first group 11. Equally, thermocouples 52, 54, 56, 58 are electrically connected to one another, by making an external electrical connection between the leg b of the second type of material with leg a of the first type of material of another thermocouple 53. The electrical series connection of thermocouples 52, 54, 56, 58 in this manner forms the second group 12. Here again, thermocouples of the second group are not physically laying on the substrate 13 adjacent other thermocouples of the second group. Rather, thermocouples of the first group are interspersed. This way, an interleaved pattern of thermocouples 51, 53, 55, 57 of the first group 11 and of thermocouples 52, 54, 56, 58 of the second group 12 is obtained. The interleaved pattern of thermocouples preferably repeats throughout the stack of thermocouples, i.e. throughout the thermopile.

Both groups 11 and 12 are electrically interconnected to one another at a connection point 6, functioning as reference node. This connection point may be connected to a reference voltage such as ground or a supply voltage.

The primary function of each thermocouple is to sense the temperature of the target by responding to the temperature difference between the junctions. The hot junction h may be coated with a high emissivity material such as carbon black, for increasing absorption of infrared radiation. The cold junctions c1, c2 may be coated with a low emissivity material, such as gold, silver or aluminum, for decreasing its absorption of infrared radiation.

Due to the interleaving of thermocouples in accordance with the examples, the problems as occurring in the prior art may be alleviated or even completely removed. Indeed, if there is a mismatch, e.g. due to process variation, on the resistances of the thermocouples over the substrate area, this process variation will occur both, and substantially equally, in thermocouples of the first group 11 and in thermocouples of the second group 12. Furthermore, the substrate resistances Rgnd_a and Rgnd_B in the vicinity of the pixel are made more equal because the path the current has to follow through the first and second group 11, 12 of thermocouples is made more equal. Furthermore, although not illustrated in FIG. 3, CA-i and CB-i parasitic capacitances are associated to each of the thermocouples. In case a thermopile comprises 120 thermocouples there are 120 CA-i and 120 CB-i parasitic capacitances. It is an advantage of the interleaved layout according to the examples that each CA-i is connected to substantially the same substrate point as CB-i, providing at the same time equal impedance to ground for TPA and TPB, thus equalizing the disturbances that will couple in TPA and TPB through the parasitic capacitances CA-i and CB-i.

In the example illustrated in FIG. 5, the thermocouples have a conventional layout with the first thermocouple legs a being positioned on the substrate 13 adjacent the second thermocouple legs b. However, the present invention is not limited thereto. In alternative examples, stacks of thermocouple leg material are made on top of the substrate 13. An example is schematically illustrated in FIG. 6. In this example, again eight thermocouples 61, 62, 63, 64, 65, 66, 67, 68 are illustrated for ease of clarity, the invention not being limited to this number, nor to the illustrated shapes of the thermocouples. Each thermocouple 61, 62, 63, 64, 65, 66, 67, 68 consists of a first leg a of first material positioned on top of a second leg b of second material, the second material being different from the first material, both thermocouple legs a, b being stacked onto a substrate 13. The thermocouples are electrically connected in series. The thermocouples are split into a first group 11 comprising thermocouples 61, 63, 65, 67 and a second group 12 comprising thermocouples 62, 64, 66, 68. Both groups 11, 12 are connected in series, with a reference node 6 being provided between the first group 11 and the second group 12. The reference node 6 is intended for being coupled to a reference voltage such a ground or supply voltage, for performing differential measurement to reject common mode signals.

In accordance with the examples, the electrical interconnection of thermocouples is such that thermocouples which are subsequently interconnected to one another in one group, are not physically located adjacent one another on the substrate 13. As an example, thermocouple 63 is electrically connected in a subsequent electrical connection to thermocouple 61, both of the first group 11, but in the physical layout a thermocouple 62 is present in between and adjacent to thermocouple 61 and thermocouple 63, the thermocouple 62 being part of the second group 12.

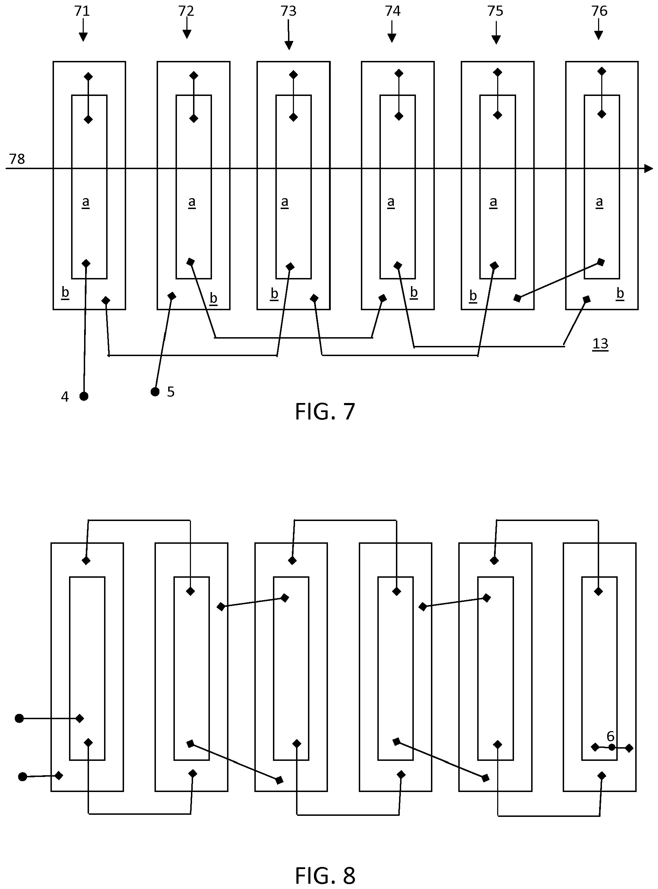

The above example illustrates a plurality of thermocouples oriented in an essentially circular pattern around a center point. However, the present invention is not limited thereto, and also includes thermopiles where the thermocouples are oriented in an essentially linear pattern along a line. This is for example illustrated in FIG. 7, as an example only for thermocouples which comprise first and second legs a, b stacked on top of one another on the substrate 13. However, examples are also included where thermocouples, laid out along a line on a substrate, have legs adjacent one another rather than stacked onto one another on the substrate 13.

In the sample illustrated in FIG. 7, only 6 thermocouples 71, 72, 73, 74, 75, 76 are illustrated. All six thermocouples are connected in series; the series connection, however, being split in two equal parts at connection point 6. The first leg a of thermocouple 71 is electrically connected to output terminal 4. The second leg b of thermocouple 71 is electrically connected to the first leg a of thermocouple 73. The second leg b of thermocouple 73 is electrically connected to the first leg a of thermocouple 75. The second leg b of thermocouple 75 is electrically connected to the first leg a of thermocouple 76, the connection point 6 between the first group 11 and the second group 12 being formed by this connection between the second leg b of thermocouple 75 and the first leg a of thermocouple 76. In a similar manner, second legs b of thermocouples 76 and 74 are coupled to the first legs a of thermocouples 74 and 72, respectively. The second leg b of thermocouple 72 is electrically connected to output terminal 5.

According to examples of the present invention, two thermocouples electrically connected in series subsequently and forming part of a same group 11, 12, are not physically located adjacent one another. The only thermocouples subsequently electrically connected to one another and physically laid out adjacent one another are, in the example illustrated, thermocouple 75 and thermocouple 76, which do not form part of the same group: thermocouple 75 is part of the first group 11, and thermocouple 76 is part of the second group 12. In the example illustrated in FIG. 7, thermocouples 71, 73, 75 of the first group 11 are physically interleaved with thermocouples 72, 74, 76 of the second group 12 along an essentially linear path 78.

In accordance with an embodiment of the present invention, a double interleaving may be provided, where not only thermocouples of the first group 11 are interleaved with thermocouples of the second group 12, but where also first and second legs stacked onto one another form part of different thermocouples. In the embodiment illustrated in FIG. 8, a first leg 81 forms a thermocouple with a second leg 83 placed onto another first leg 82 adjacent the first leg 81, in the embodiment illustrated at the right hand side thereof. At the hot junction (top of the drawing) the first leg 81 and the second leg 83 are shorted. In the prior art such shorting between first and second legs is performed with shorting material such as aluminum between a first leg and a second leg which are for example placed on top of one another. In the present case, first and second legs are shorted which are not placed on top of one another. This means that a few micrometers more length of shorting material is to be provided, but this, however, has no impact on the performance of the thermopile. In the embodiment illustrated, first legs 81 of a first group of thermopiles are interleaved with first legs 82 of a second group of thermopiles. Also second legs 83 of the first group of thermopiles are interleaved with second legs 84 of the second group of thermopiles. However, contrary to standard thermopiles, first legs 81 and second legs 83 of the first group of thermopiles on the one hand, and first legs 82 and second legs 84 of the second group of thermopiles on the other hand, are not stacked onto one another. Rather second legs 83 of the first group of thermopiles are stacked onto first legs 82 of the second group of thermopiles, and second legs 84 of the second group of thermopiles are stacked onto first legs 81 of the first group of thermopiles. This is called double interleaving in the context of the present invention.

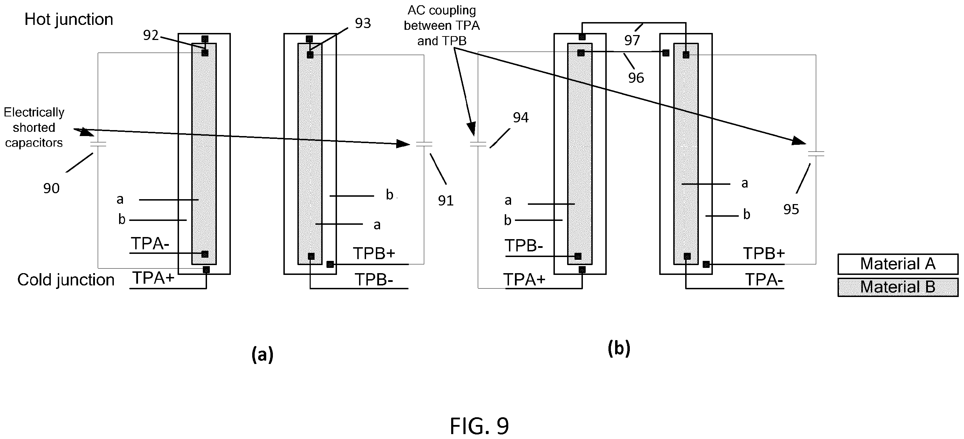

A comparison of a conventional design of a thermocouple and a double interleaved design in accordance with embodiments of the present invention is illustrated in FIG. 9, where part (a) illustrates the conventional design (two thermopiles each comprising a first leg a and a second leg b stacked onto one another), and where part (b) illustrates a double interleaved design (two thermopiles each comprising a first leg a and a second leg b, but whereby the first leg a of the first thermopile is stacked onto the second leg b of the second thermopile and vice versa).

In the conventional case (FIG. 9(a)) the presence of the first leg a on top of the second leg b of each of the thermocouples forms a capacitive coupling 90, 91 but these capacitive couplings 90, 91 are shorted by the electrical interconnections 92, 93 made at the hot junction of the thermocouple.

In accordance with embodiments of the present invention (FIG. 9(b)) the presence of the first leg a of the first thermocouple on the second leg b of the second thermocouple and vice versa also form capacitive couplings 94, 95. However, as the first leg a of one stack is electrically connected by electrical connections 96, 97 to the second leg b of another stack, the capacitive couplings 94, 95 are not shorted. Hence an effective capacitance is present between first and second legs stacked onto one another. This creates an effective coupling capacitor between legs of the thermopiles. If the capacitance between material A and material B increases, or thus if the capacitance between the first leg and the second leg increases, the AC coupling improves. This will help equalize the AC voltages on the thermopiles. Hence a double interleaved sensor design in accordance with embodiments of the present invention provides an improved balancing of signals.

Thermopiles in accordance with embodiments of the present invention may be implemented in a radiation detector apparatus. The radiation detector apparatus may comprise at least one, preferably a plurality of thermopiles in accordance with embodiments of the present invention. Each thermopile in accordance with embodiments of the present invention may form a pixel of a radiation detector apparatus.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A detector (10) for responding to infrared radiation from a target to produce a temperature indicating output signal to measurement electronics, said detector (10) comprising:
a plurality of thermocouples laid out on a substrate (13), each thermocouple comprising a first leg of a first material and a second leg of a second material, the first material being different from the second material, the first leg and the second leg being electrically connected,
the plurality of thermocouples being divided into a first group (11) comprising a plurality of first thermocouples electrically connected in series, and a second group (12) comprising a plurality of second thermocouples electrically connected in series, the first group (11) and the second group (12) of thermocouples being electrically connected in series with one another at a connection point (6),
said first group (11) and said second group (12) being supported on a common substrate (13) in close proximity to one another and first legs of thermocouples of the first group (11) being physically interleaved with first legs of thermocouples of the second group (12),
**characterized in that**
a thermocouple is physically made from a first material (A) from a first stack of first and second materials not forming a thermocouple, and from a second material (B) from a second stack of first and second materials not forming a thermocouple.

2. A detector (10) according to claim 1, wherein first legs of thermocouples of the first group (11) and first legs of thermocouples of the second group (12) are physically interleaved along an essentially circular path.

3. A detector (10) according to claim 1, wherein first legs of thermocouples of the first group (11) and first legs of thermocouples of the second group (12) are physically interleaved along an essentially linear path.

4. A detector (10) according to any of the previous claims, wherein second legs of thermocouples of the first group (11) are physically interleaved with second legs of thermocouples of the second group (12).

5. A detector according to claim 4, wherein thermocouples of the first group (11) are physically interleaved with thermocouples of the second group (12).

6. A detector (10) according to any of the previous claims, wherein the first stack and the second stack are adjacent to one another.

7. A detector (10) according to any of the previous claims, wherein, when progressing along a geometrical direction over the plurality of thermocouples, polarity of the first group (11) of thermocouples is electrically opposite with respect to polarity of the second group (12) of thermocouples.

8. A detector (10) according to any of the previous claims, furthermore comprising a signal processor adapted for differentially processing signals at the connection point (6).

9. A detection apparatus comprising a plurality of detectors (10) according to any of the previous claims.

## Patentansprüche

1. Detektor (10) zum Reagieren auf Infrarotstrahlung von einem Ziel, um ein Ausgangssignal, das die Temperatur angibt, zu Messelektronik zu erzeugen, wobei der Detektor (10) Folgendes umfasst:
eine Vielzahl von Thermoelementen, die auf einem Substrat (13) angeordnet ist, wobei jedes Thermoelement einen ersten Schenkel aus einem ersten Material und einen zweiten Schenkel aus einem zweiten Material umfasst, wobei das erste Material von dem zweiten Material unterschiedlich ist, wobei der erste Schenkel und der zweite Schenkel elektrisch verbunden sind,
wobei die Vielzahl von Thermoelementen in eine erste Gruppe (11) unterteilt ist, die eine Vielzahl erster Thermoelemente, die elektrisch in Serie geschaltet sind, umfasst, und eine zweite Gruppe (12), die eine Vielzahl zweiter Thermoelemente umfasst, die elektrisch in Serie geschaltet sind, wobei die erste Gruppe (11) und die zweite Gruppe (12) von Thermoelementen elektrisch miteinander an einer Verbindungsstelle (6) in Serie geschaltet sind,
wobei die erste Gruppe (11) und die zweite Gruppe (12) auf einem gemeinsamen Substrat (13) in unmittelbarer Nähe zueinander getragen werden und die ersten Schenkel von Thermoelementen der ersten Gruppe (11) physisch mit Schenkeln von Thermoelementen der zweiten Gruppe (12) verschachtelt sind,
**dadurch gekennzeichnet, dass**
ein Thermoelement physisch aus einem ersten Material (A) aus einem ersten Stapel erster und zweiter Materialien, die kein Thermoelement bilden, und aus einem zweiten Material (B) aus einem zweiten Stapel erster und zweiter Materialien, die kein Thermoelement bilden, besteht.

2. Detektor (10) nach Anspruch 1, wobei ersten Schenkel von Thermoelementen der ersten Gruppe (11) und erste Schenkel von Thermoelementen der zweiten Gruppe physisch entlang eines im Wesentlichen kreisförmigen Verlaufs verschachtelt sind.

3. Detektor (10) nach Anspruch 1, wobei erste Schenkel von Thermoelementen der ersten Gruppe (11) und erste Schenkel von Thermoelementen der zweiten Gruppe (12) physisch entlang eines im Wesentlichen linearen Verlaufs verschachtelt sind.

4. Detektor (10) nach einem der vorhergehenden Ansprüche, wobei zweite Schenkel von Thermoelementen der ersten Gruppe (11) physisch mit zweiten Schenkeln von Thermoelementen der zweiten Gruppe (12) verschachtelt sind.

5. Detektor nach Anspruch 4, wobei Thermoelemente der ersten Gruppe (11) physisch mit Thermoelementen der zweiten Gruppe (12) verschachtelt sind.

6. Detektor (10) nach einem der vorhergehenden Ansprüche, wobei der erste Stapel und der zweite Stapel zueinander benachbart sind.

7. Detektor (10) nach einem der vorhergehenden Ansprüche, wobei beim Fortschreiten entlang einer geometrischen Richtung über die Vielzahl von Thermoelementen eine Polung der ersten Gruppe (11) von Thermoelementen zu einer Polung der zweiten Gruppe (12) von Thermoelementen elektrisch entgegengesetzt ist.

8. Detektor (10) nach einem der vorhergehenden Ansprüche, ferner einen Signalprozessor umfassend, der angepasst ist, um Signale an der Verbindungsstelle (6) differenziell zu verarbeiten.

9. Erfassungsgerät, umfassend eine Vielzahl von Detektoren (10) nach einem der vorhergehenden Ansprüche.

## Revendications

1. Détecteur (10) pour répondre à un rayonnement infrarouge provenant d'une cible afin de produire un signal de sortie d'indication de température à des dispositifs électroniques de mesure, ledit détecteur (10) comprenant :
une pluralité de thermocouples disposés sur un substrat (13), chaque thermocouple comprenant une première branche d'un premier matériau et une deuxième branche d'un deuxième matériau, le premier matériau étant différent du deuxième matériau, la première branche et la deuxième branche étant électriquement reliées,
la pluralité de thermocouples étant divisée en un premier groupe (11) comprenant une pluralité de premiers thermocouples reliés électriquement en série, et un deuxième groupe (12) comprenant une pluralité de deuxièmes thermocouples reliés électriquement en série, le premier groupe (11) et le deuxième groupe (12) de thermocouples étant reliés électriquement en série l'un à l'autre à un point de raccordement (6),
ledit premier groupe (11) et ledit deuxième groupe (12) étant supportés sur un substrat commun (13) en étroite proximité l'un de l'autre et des premières branches de thermocouples du premier groupe (11) étant physiquement entrelacées avec des premières branches de thermocouples du deuxième groupe (12),
**caractérisé en ce que**
un thermocouple est physiquement constitué d'un premier matériau (A) à partir d'un premier empilement de premier et deuxième matériaux ne formant pas un thermocouple, et d'un deuxième matériau (B) à partir d'un deuxième empilement de premier et deuxième matériaux ne formant pas un thermocouple.

2. Détecteur (10) selon la revendication 1, dans lequel des premières branches de thermocouples du premier groupe (11) et des premières branches de thermocouples du deuxième groupe (12) sont physiquement entrelacées le long d'une voie sensiblement circulaire.

3. Détecteur (10) selon la revendication 1, dans lequel des premières branches de thermocouples du premier groupe (11) et des premières branches de thermocouples du deuxième groupe (12) sont physiquement entrelacées le long d'une voie sensiblement linéaire.

4. Détecteur (10) selon l'une quelconque des revendications précédentes, dans lequel des deuxièmes branches de thermocouples du premier groupe (11) sont physiquement entrelacées avec des deuxièmes branches de thermocouples du deuxième groupe (12).

5. Détecteur selon la revendication 4, dans lequel des thermocouples du premier groupe (11) sont physiquement entrelacés avec des thermocouples du deuxième groupe (12).

6. Détecteur (10) selon l'une quelconque des revendications précédentes, dans lequel le premier empilement et le deuxième empilement sont adjacents l'un à l'autre.

7. Détecteur (10) selon l'une quelconque des revendications précédentes, dans lequel, lors d'une progression dans un sens géométrique parmi la pluralité de thermocouples, une polarité du premier groupe (11) de thermocouples est électriquement opposée à une polarité du deuxième groupe (12) de thermocouples.

8. Détecteur (10) selon l'une quelconque des revendications précédentes, comprenant en outre un processeur de signal apte à traiter différentiellement des signaux au point de raccordement (6).

9. Appareil de détection comprenant une pluralité de détecteurs (10) selon l'une quelconque des revendications précédentes.
